# EUROPEAN PATENT APPLICATION

(11) **EP 2 647 923 A1**
(43) Date of publication of application: **09.10.2013**
(21) Application number: 13447006.1
(22) Date of filing: 28.02.2013
(51) Int. Cl.: F24J 2/04, F24J 2/51, F24J 2/52, F24J 2/46

(54) **Module for making a roof covering provided with supports for bearing photovoltaic panels**

(30) Priority: 28.02.2012 BE 201200122
(71) Applicant: Carbomat N.V., 1501 Buizingen (BE)
(72) Inventor: Mespreuve, Eddy, 1501 Buizingen (BE)
(74) Representative: Callewaert, Koen

(57) **Abstract**

Module for bearing photovoltaic panels (33) or thermal solar panels and for making a roof covering which is to be mounted on a roof construction or for applying a wall cladding, whereby this module (1) has two side walls (2,3) extending practically parallel and each having a roof side (4) and a free side (5), such that the roof side (4) of both side walls (2,3) defines a base surface (6) of the module (1), whereby a water-resistant layer (7) extends between said side walls (2,3) and whereby a thermal insulation material (19) is provided, connecting to said side walls (2,3) between the water-resistant layer (7) and said base surface (6), whereby this module (1) contains supports (21,22) for said panels (33) extending in the longitudinal direction of the side walls (2,3), which extend between said water-resistant layer (7) and said free side (5) of at least one of the side walls (2), such that between the plane (23) which is defined by these supports (21,22) and said water-resistant layer (7) is formed a space for ventilation (24).

## Description

The invention concerns a module to be mounted on a roof construction and designed to bear photovoltaic panels. This module has two side walls extending practically parallel, each having a roof side and a free side. The roof side of both side walls hereby defines a base surface of the module which is to connect to a roof construction. Between said side walls extends a water-resistant layer, and a thermal insulation material connects to said side walls between the water-resistant layer and said base surface. In order to bear said photovoltaic panels, the module comprises supports extending in the longitudinal direction of the side walls, extending between said water-resistant layer and said free side of at least one of the side walls. The invention also concerns a roof covering mounted on a roof construction which is composed of such modules.

According to the present state of the art, photovoltaic solar panels are usually mounted over a finished roof covering by means of a supporting frame. The installation of photovoltaic panels involves an additional step in the construction of a building and implies, among other things, that parts of the roof covering must be removed so as to be able to anchor the supporting frame to the underlying roof construction. In particular, fixing a supporting frame to the roof construction and installing the photovoltaic solar panels on this bearing structure can be quite labour-intensive sometimes.

We also know slates or tiles with photovoltaic cells or photovoltaic panels integrated in their surface, which in the plane of a roof covering should be placed directly on the roof construction. Photovoltaic cells or panels which are used in such a way have for a result that the electric power generation is not optimal, however. Indeed, under intense sunlight such slates, tiles or panels can heat up considerably, which has an adverse effect on the efficiency of the electric power generation.

Documents FR 2942827, BE 860452 and FR 2401290 describe roof constructions which are provided with an insulation layer and supports for photovoltaic panels or thermal solar panels. The systems described in these documents must be assembled and mounted on a roof construction on the spot, however. In particular, these systems are not suitable to be assembled beforehand, for example in the shape of modules, and to be subsequently fixed to a roof construction. Moreover, it is complicated or impossible to replace for example defect panels in a simple manner once the systems have been completely assembled and mounted on a roof construction. Indeed, to this end it would be necessary to remove the present water sealing, to subsequently replace the panels and provide a new water sealing. Nor do these systems provide any solution for connecting adjacent modules in a watertight manner.

The invention aims to remedy these disadvantages and to provide an integrated system which makes it possible to make a roof covering on a roof construction in a simple and efficient manner, whereby photovoltaic panels are further installed on this roof covering in a very simple manner, practically without any adverse effect on the output of these panels.

To this aim, according to the invention, there is a space for ventilation in this module between the plane which is defined by said supports and said water-resistant layer.

Practically, a first one of said side walls has two supports for said panels extending in its longitudinal direction. A first one of these supports extends on the side of the side wall of said water-resistant layer, whereas a second one of these supports extends on the opposite free lateral side of this first side wall. The second one of these side walls hereby extends at a height from said base surface which is smaller than or equal to the distance from this base surface to said second support.

According to an interesting embodiment of the module according to the invention, the free end of said first side wall is T-shaped, such that a U-shaped guide rail is formed between said supports and this free end. Said panels must be placed in this U-shaped guide rail with their lateral edges.

According to an alternative embodiment of the module according to the invention, the latter works in conjunction with an end profile having two lips extending in one and the same plane. This end profile can be fixed to the free end of a first side wall of said side walls, in such a way that said lips extend parallel to said base surface. Between these lips and said supports is thus formed a U-shaped guide rail in which must be placed a lateral edge of said panels.

According to a special embodiment of the module according to the invention, said second side wall has a protruding ridge on its free side, whereas said first side wall has a recess on its free side with a bearing surface at a height in relation to said base surface which corresponds to the corresponding height of said ridge, such that when said free side of said first side wall of a first module is placed in a connecting and practically fitting manner against the free side of said second side wall of a connecting second module, the latter will rest on the ridge of the first module via said bearing surface.

Further, each of said side walls is composed of at least two metal profiles extending in the longitudinal direction of the corresponding side wall. These profiles are separated from one another by a thermal break which is entirely enclosed by said insulation material on the sides of the side walls of the module which are directed to one another.

According to an embodiment of the invention, these thermal breaks extend as of both side walls at practically the same distance from said base surface. This makes sure that the thermal breaks of connecting modules placed adjacent to one another are positioned opposite each other.

According to an interesting embodiment of the module according to the invention, it comprises at least one fastening member, and a recess is provided in the free side of a profile extending on the roof side of each of the side walls. In this recess should be mounted a retention part of said fastening member, whereby this fastening member must extend along the free side of the side wall concerned, beyond said base surface. The far end of the fastening member opposite said retention part forms a fixing part making it possible to attach the fastening member to said roof construction.

The invention also concerns a pair of profiles for manufacturing the module according to any one of the preceding embodiments, whereby this pair of profiles contains two elongated profiles having each a roof side and a free side. These profiles have means on their roof side to connect to a thermal break and they are provided on their lateral sides with a standing edge making it possible to fix a water-resistant layer to the profile. A first profile of this pair of profiles has, between said standing edge and the free side, supports on either side for a photovoltaic panel, whereby these supports have a bearing surface extending practically transversely to the lateral side of the profiles. The height of a second profile of this pair of profiles is hereby smaller than or equal to the distance between the roof side of the first profile and the supports of the latter.

Further, the invention concerns a roof covering which is made by placing modules according to one of the embodiments of the invention adjacent to one another. In this roof covering, these modules are fixed adjacent to one another on a roof construction, such that a first side wall of each module fits tightly to a second side wall of a connecting module.

Other particularities and advantages of the invention will become clear from the following description of a few specific embodiments of the module and the associated profiles according to the invention. This description is given as an example only and does not limit the scope of the claimed protection in any way; the reference figures used hereafter refer to the accompanying drawings.
Figure 1 is a schematic cross section of a module according to a first embodiment of the invention.
Figure 2 is a schematic cross section of two side walls, formed of profiles, of modules according to this second embodiment of the invention placed next to one another.
Figure 3 is a schematic cross section of a first profile of a side wall of the module represented in figure 1.
Figure 4 is a schematic cross section of a second profile of a side wall of the module represented in figure 1.
Figures 5 is a schematic cross section of a third profile of a side wall of the module represented in figure 1.
Figure 6 is a schematic view in perspective of two modules according to the invention.
Figure 7 is a schematic cross section of a part of a roof covering composed of several modules according to a second embodiment of the invention.
Figure 8 is a schematic cross section of the connection of two modules situated next to one another according to this second embodiment of the invention.
Figure 9 is a schematic cross section of a first profile of a side wall of the modules represented in figures 7 and 8.
Figure 10 is a schematic cross section of a second profile of a side wall of the modules represented in figures 7 and 8.
Figures 11 is a schematic cross section of a third profile of a side wall of the modules represented in figures 7 and 8.
Figures 12 is a schematic cross section of a fourth profile of a side wall of the modules represented in figures 7 and 8.
Figure 13 is a schematic cross section of an end profile which can be fixed to the top side of the profile represented in figure 9.
Figure 14 is a schematic cross section of a module according to a particularly interesting embodiment of the invention.
Figure 15 is a schematic cross section of a second side wall of the module from figure 14.
Figure 16 is a schematic cross section of a first side wall of the module from figure 14.

In the different drawings, the same reference figures refer to identical or analogous elements.

The invention generally concerns a module or a modular system which makes it possible to mount a roof covering on a roof construction. In particular, the modules according to the invention can be fixed on the trusses, rafters or girders of a roof construction, depending on the type of roof construction. Preference is given however, to the direct attachment of the modules to the girders of a roof construction. The module according to the invention can be placed on sloping as well as on flat roofs.

A major characteristic of the modules according to the invention is that they allow to fix photovoltaic solar panels in a simple manner to these modules after the modules have been placed on a roof construction.

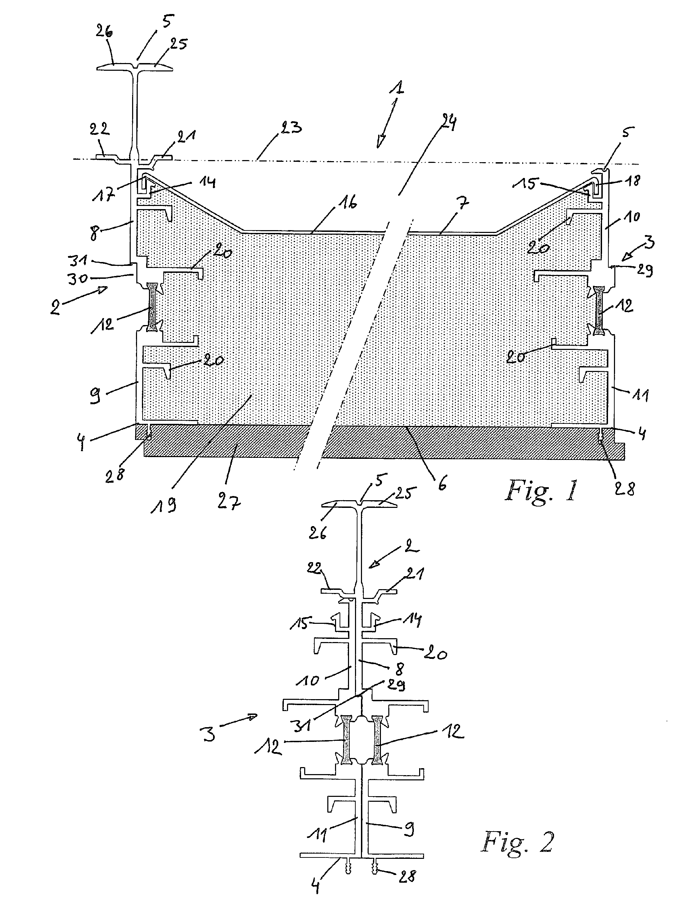

Figure 1 is a schematic cross section of a module according to a first embodiment of the invention. This module 1 is elongated and has two side walls 2 and 3 extending practically parallel, which each have a roof side 4 and a free side 5. The bottom side, in particular the roof side 4 of these walls 2 and 3 defines a base surface 6 of the module 1. Further, a water-resistant layer 7 extends between these side walls 2 and 3. By a water-resistant layer 7 is also understood a water-proof layer in this description.

Each of said side walls 2 and 3 is composed of two metal profiles 8, 9, 10 and 11. These profiles extend in the longitudinal direction of the corresponding side walls 2 and 3.

A first side wall 2 is formed of the profiles 8 and 9 which are separated from each other by a thermal break 12. Such a thermal break 12 is known as such by someone skilled in the art, and consists for example of a I-shaped relatively stiff strip made of plastic having a low thermal conductivity. Such a strip is made for example of a glassfibre-reinforced polyamide, and is pressed to that end in recesses provided in the opposite sides of the profiles 8 and 9, such that these profiles 8 and 9 do not make direct contact with each other.

A second side wall 3 of the module is also composed of two profiles 10 and 11 in between which has been provided a similar thermal break 12, such that the heat transport by thermal conduction between both profiles 10 and 11 is reduced as well.

These thermal breaks 12 of the side walls 2 and 3 extend at practically the same distance from the base surface 6, such that the thermal breaks 12 of connecting modules 1 placed next to one another are positioned opposite each other.

The profiles 8 and 10 which extend up to the free side 5 of said side walls 2 and 3 further have a standing edge 14 and 15 on the lateral sides directed towards one another in which a lateral edge of the water-resistant layer 7 can be fixed. This water-resistant layer 7 is formed for example of a plastic or a metal plate 16 whose side edges 17 and 18 are folded over an angle, such that these edges hook behind said standing edge 14 and 15 of the profiles 8 and 9 so as to connect this plate 16 to the profiles 8 and 9.

Between said water-resistant layer 7, i.e. the plate 16, and the base surface 6 is provided a thermal insulation material 19 which connects to said side walls 2 and 3. This thermal insulation material 19 preferably practically entirely fills the space enclosed between the side walls 2 and 3, the water-resistant layer 7 and said base surface 6, as represented in figure 1. Naturally, the space must not necessarily be completely filled, but the insulation material may extend for example between both side walls 2 and 3 in a zone round said thermal break 12.

According to the invention, the thermal break 12 of each of both side walls 2 and 3 is entirely enclosed by this insulation material 19 on the lateral sides of these side walls 2 and 3 directed towards one another.

Said insulation material may consist for example of glass wool, rock wool, polystyrene, polyurethane foam, etc.

Further, said profiles 8, 9, 10 and 11, which form said side walls 2 and 3, have anchoring members 20 extending in the insulation material 19 of the module 1. Thus, these anchoring members 20 make sure that the side walls 2 and 3 form a solid unit with the insulation material 19.

Further, the module 1 according to the invention comprises supports 21 and 22 extending in the longitudinal direction of the side walls 2 and 3 for the installation of photovoltaic panels on the module 1. These supports 21 and 22 are provided between the water-resistant layer 7 and the free side 5 of a first side wall 2. As represented in the embodiment of the invention from figure 1, these supports 21 and 22 extend on either side of the profile 8 which is situated on the free side 5 of this first side wall 2.

Thus, a first support 21 of these supports extends on the lateral side of the side wall 2 of said water-resistant layer 7, whereas a second support 22 of these supports extends on the opposite free lateral side of the first side wall 2. In order to make it possible for two identical modules according to the invention to be installed laterally adjacent to one another on a roof construction, the second side wall 3 of these side walls extends up to a height A from the base surface 6 which is smaller than or equal to the distance B from this base surface 6 to said second support 22. Consequently, the support 22 can extend in this way over the free end of the second side wall 3 or an adjacent module 1.

Figure 2 represents such a situation whereby the second side wall 3 of a module extends up to a height from the base surface 6 which is equal to the distance from this base surface 6 up to the second support 22 of the first side wall 2. In this manner, the support 22 is born by the free side 5 of the second side wall 3 of two adjacent modules. This makes it possible to align connecting modules almost perfectly in relation to one another. In this figure 2, for clarity's sake, the insulation material 19 and the water-resistant layer 7 are not represented.

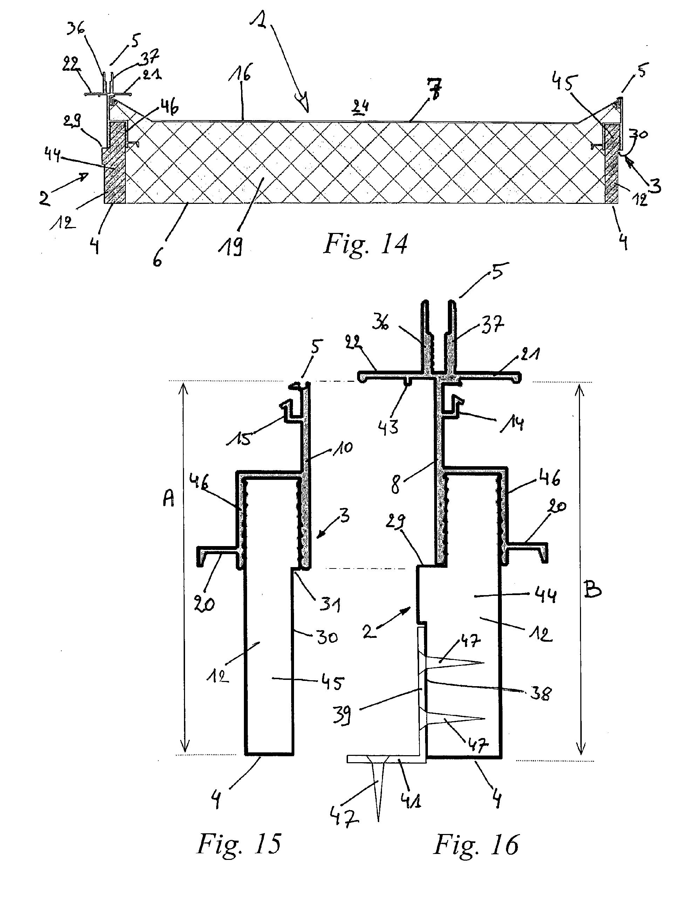

When the modules according to the invention are thus installed in a connecting manner, adjacent to one another, on a roof construction, said second support 22 of the first side wall 2 of a module will consequently extend above the free end 5 of said second wall 3 of the directly connecting module. Thus, this second support 22 make sure that no water can infiltrate between two adjacent modules. In particular, in an advantageous manner, it is made sure that this second support 22 connects to the free end 5 of said second wall 3 or extends at a small distance thereof. Possibly, a seal such as a silicone or rubber seal is provided between this second support 22 and the free end 5 of the corresponding second wall 3. In addition, a drip edge 43 may be provided on the second support 22 for example, as is represented in the embodiment of the invention represented in figures 14 to 16.

In view of a stable installation of photovoltaic solar panels on the supports 21 and 22, the latter preferably have a plane extending practically parallel to said base surface 6 on which said panels must rest.

Further, the supports 21 and 22 define a plane which is practically parallel to the base surface 6. When different modules 1 are mounted successively on a roof construction, adjacent to one another and in a connecting manner, and when photovoltaic solar panels are installed between said side walls 2 and 3 on the supports 21 and 22, the space between the water-resistant layer 7 and the plane 23 which is defined by the supports 21 and 22 will form a space for ventilation 24. In this space for ventilation 24 is created an air flow which makes sure that the solar panels are cooled.

This space for ventilation 24 is delimited by the water-resistant layer 7 which to this end has a concave cross section. In particular, a connecting line between the connecting edges 17 and 18 of the water-resistant layer 7 on the side walls 2 and 3 is situated outside said insulation material 19.

However, if there is sufficient distance between the supports 21 and 22 and the standing edges 14 and 15, or the edges 17 and 18 of the water-resistant layer, to create a space for ventilation 24, this water-resistant layer 7 can be made flat for example, and can thus be formed of a flat plate extending between both side walls 2 and 3.

The far end of the first side wall 2 on the free side 5 thereof is T-shaped, such that it has two lips 25 and 26 extending opposite one another. These lips 25 and 26 extend parallel to the base surface 6, such that a U-shaped guide rail is formed between the supports 21 and 22 and this far end. The photovoltaic panels can thus be inserted in this U-shaped guide rail in the longitudinal direction of the modules, after they have been mounted on a roof construction in a connecting manner. The distance between the lips 25 and 26 and the respective supports 21 and 22 is hereby at least equal to the thickness of the lateral edges of the panels, such that the latter can be installed with their edges in the U-shaped guide rails.

Naturally, the width of the modules 1 must be adapted to the width of the photovoltaic panels. A small clearance is hereby preferably provided so as to avoid damage due to for example thermal expansion of the panels and/or the modules. Thus, the distance between the vertical part of the profiles 8 of the first side wall 2 of successive modules 1, extending on the free side 5, is at least equal to and preferably somewhat larger than the width of the photovoltaic panels.

Further, the bottom side of the module 1 is provided with a bottom plate 27 on which said side walls 2 and 3 extend practically transversely. This bottom plate connects to the insulation material 19 and is for example made of plastic, chip plate, plywood, MDF or plaster board, etc. The profiles 9 and 11 extending up to the roof side 4 of the side walls 2 and 3 are solidly connected to this bottom plate 27 by means of a toothed protrusion 28 which is pressed in a corresponding groove in the bottom plate 27.

When the insulation material 19 and the side walls 2 and 3 together have sufficient rigidity, it is not strictly necessary to provide a bottom plate 27. If there is a bottom plate 27, it will form the interior finish of the roof construction.

When placing the modules according to the invention on a roof construction, they should connect to one another in an almost entirely fitting manner, whereby it is important that these laterally adjacent modules are aligned, i.e. all extend in one single plane. To this end, said second side wall 3 has a protruding ridge 29 on its free lateral side, i.e. the side opposite said insulation material 19, whereas said first side wall 2 has a recess 30 with a bearing surface 31 on its free lateral side. This bearing surface 32 extends at a height in relation to the base surface 6 which corresponds to the corresponding height of the ridge 29, such that, when said free side of said first side wall 2 of a first module is placed in a practically entirely fitting manner and connecting to the free side of the second side wall 3 of a connecting second module, the latter module will rest on the ridge 29 of the first module via the bearing surface 31.

Figure 2 represents the profiles 8, 9, 10 and 11 of a first side wall 2 and a second side wall 3 of two connecting modules according to the above-described embodiment of the invention.

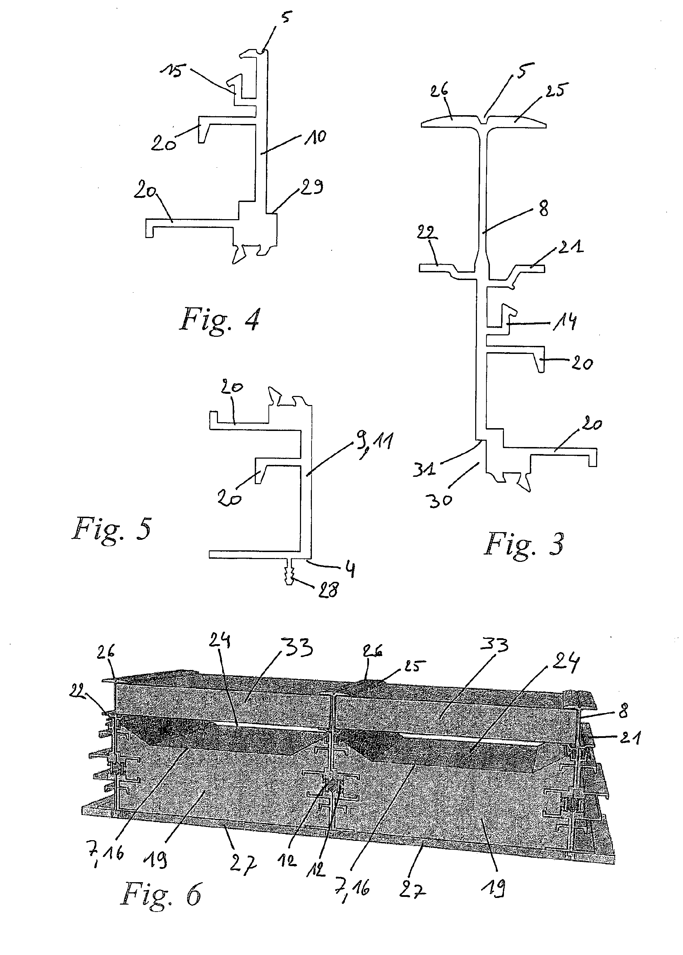

Further, figures 3 to 5 show a cross section of the profiles which are used in this embodiment of the module according to the invention.

Figure 6 is a schematic representation in perspective of two connecting modules placed next to one another according to the same embodiment, whereby photovoltaic solar panels 33 have been mounted on these modules.

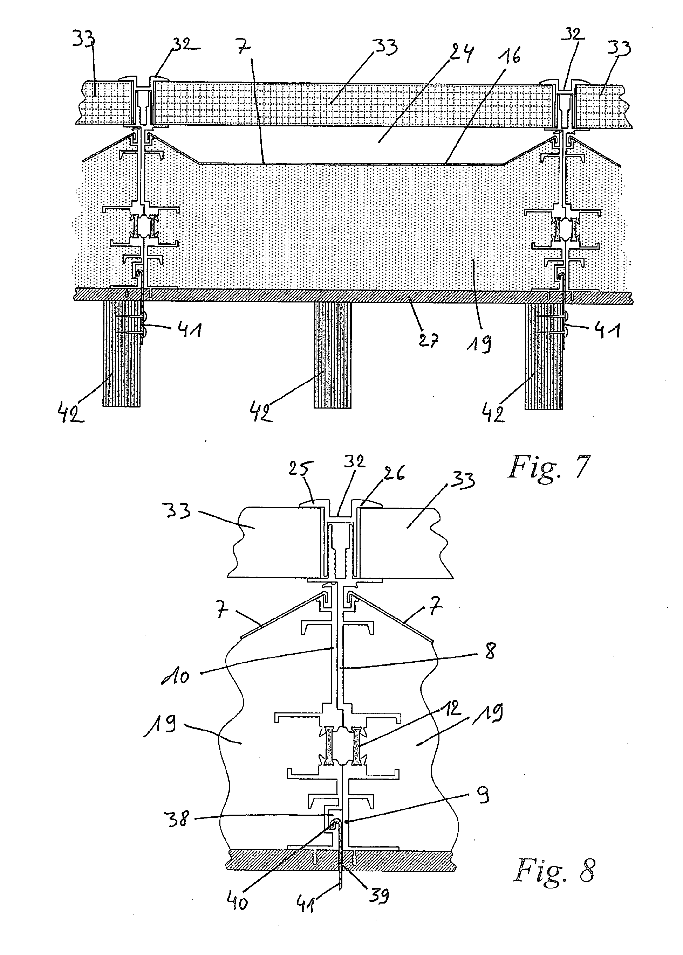

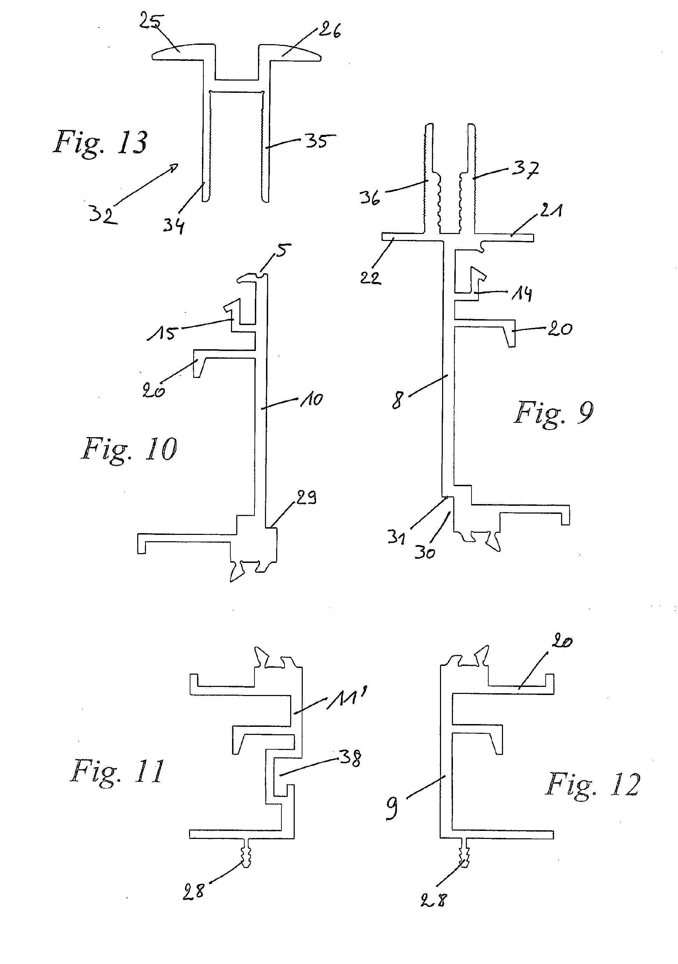

A second embodiment of the module and the associated profiles according to the invention is represented in figures 7 to 13.

This second embodiment differs from the above-described first embodiment in that said first side wall 2 works in conjunction with an end profile 32 having two lips 25 and 26 extending in one and the same plane. This end profile 32 can be fixed to the far end of the first side wall 2, on its free side 5. To this end, the end profile 32 has two parallel legs 34 and 35 extending transversely to the lips 25 and 26, whereby the surface of the sides of these legs 34 and 35 directed towards one another is somewhat serrated. The far end of the first side wall 2 has two parallel legs 36 and 37 as well extending practically at right angles to the base surface 6 and whose surface is serrated as well. These parallel legs 36 and 37 extend in particular transversely to the supports 21 and 22 of the corresponding profile 8 of this first side wall 2. Thus, the end profile 32 can be slid with the legs 34 and 35 over the legs 36 and 37 of the first side wall 2, whereby as the serrated surfaces mesh, this results in a secure mounting. The end profile 32 is thus attached to the first side wall 2 in a detachable way.

Naturally, also other mounting options are possible. Thus, the end profile 32 may not have any serrated surfaces, for example, and it may be fixed to the free side 5 of the first side wall 2 by means of gluing or with bolts.

The end profile 32 is fixed to the first side wall 2 after the photovoltaic panels 33 have been placed on said supports 21 and 22. The lips 25 and 26 extend parallel to the base surface 6 then, whereby a U-shaped guide rail is formed between these lips 25 and 26 and the supports 21 and 22, in which the lateral edges of the panels 33 are situated.

Further, this second embodiment of the invention differs from the above-described first embodiment in that the profile 11 which extends up to the roof side 4 of the second side wall 3 has a recess 38 on its free side. This recess 38 has a standing edge, such that a fastening member 39 can be fixed in the recess 38 with a retention part. This retention part 40 is formed in particular by a hook which engages behind the standing edge of the recess 38.

The fastening member 39 extends as of the retention part 40 along the free side of this second side wall 3, past the base surface 6 and, preferably, past the bottom plate 27. The far end opposite said retention part 40 of the fastening member forms a fixing part 41 which makes it possible to solidly fix the fastening member 39 to said roof construction. In figure 7, this fixing part 41 is fixed for example with screws or nails to the trusses 42 of a roof construction.

According to an alternative embodiment of the invention, in the above-described first or second embodiment, said thermal break 12 is formed of a beam-shaped element made of, for example, solid wood, plastic, chip plate, plywood, MDF or plasterboard, etc. In particular, such a beam-shaped element substitutes said thermal break 12 and the connecting profiles 9 and 11 of the side walls 2 and 3 extending on the roof side. To this end, the shape of the roof side of said profiles 8 and 10 of the side walls 2 and 3, extending on the top side of the module, is adapted somewhat, such that they can be solidly connected to the beam-shaped element.

Further, at least at the height of the connection to said profiles 8 and 10, the beam-shaped element is almost completely surrounded by insulation material on the lateral sides of the walls 2 and 3 of a single module directed towards one another.

Figures 14 to 16 show an example of such an alternative embodiment of a module according to the invention. The roof side of each of the walls 2 and 3 is hereby formed of a beam-shaped element 44, and 45 respectively, extending in the longitudinal direction of the module 1.

In order to solidly connect the profiles 8 and 9 extending on the top side of the side walls 2 and 3 to the corresponding beam-shaped element 44 of 45, these profiles 8 and 9 have a flange 46 with an L-shaped cross section on their lateral sides directed towards one another. As a result, a U-shaped recess is formed in which said beam-shaped element 44 or 45 is clamped over the entire length. In particular, the beam-shaped element 44 or 45 is pressed in said U-shaped recess. The beam-shaped element 44 and 45 of each of the walls 2 and 3 consequently extends over the entire length of the module between the upper profile 8 or 10 and the base surface 6 of the module. The beam-shaped element 44 and 45 forms a standing board.

Further, similar to what has been described in the preceding embodiments, a recess 38 is preferably provided in at least a beam-shaped element of the side walls 2 and 3 in which a fastening member 39 can be mounted so as to fix the module 1 to a roof construction with for example screws 47.

In an interesting way, on the free lateral side of the first side wall is provided a protruding ridge 29, whereas the free lateral side of the second side wall 3 has a recess 30 with a bearing surface 31. This bearing surface 31 extends at a height in relation to the base surface 6 which corresponds to the corresponding height of the ridge 29. This makes it possible, when two modules according to the invention are mounted laterally adjacent to each other, for the second module to rest on the ridge 29 of the first module 1 via its bearing surface 31.

Just as is the case with the above-described embodiments of the invention, the second support 22 of the first side wall 2 of a module extends above the free end 5 of the second wall 3 of a directly connecting module when the modules according to the invention are placed laterally connecting next to one another on a roof construction. The second support 22 makes sure that no water can infiltrate between two adjacent modules. In particular, in an advantageous manner, it is made sure that this second support 22 connects to the free end 5 of said second wall 3 or extends at a short distance thereof. Possibly, a seal such as a silicone or rubber seal is provided between this second support 22 and the free end 5 of the corresponding second wall 3.

Naturally, the invention is not restricted to the above-described embodiments of the module and the profiles according to the invention as represented in the accompanying drawings. It goes without saying that different variants can be applied within the scope of the invention.

Thus, it is possible for example for each of the side walls 2 and 3 to be formed of a single profile, such that there is no thermal break in these side walls. This is for example the case when the side walls are made of plastic profiles, such as for example PVC.

The profiles forming the side walls are preferably made of aluminium, but also other metals or materials can be used. The same goes for the plate forming said water-resistant layer.

Although the foregoing description describes a module on which are placed photovoltaic solar panels, it goes without saying that the module and profiles are also suitable for installing thermal solar panels for sanitary hot water supply on.

Further, the invention is not restricted to modules which are fixed on a roof construction for assembling a roofing, but the modules can also be used as wall cladding or possibly as independent construction elements.

## Claims

1. Module for bearing photovoltaic panels (33) or thermal solar panels and for making a roof covering which is to be mounted on a roof construction or for applying a wall cladding, whereby this module (1) has two side walls (2,3) extending practically parallel and each having a roof side (4) and a free side (5), such that the roof side (4) of both side walls (2,3) defines a base surface (6) of the module (1), whereby a water-resistant layer (7) extends between said side walls (2,3) and whereby a thermal insulation material (19) is provided, connecting to said side walls (2,3) between the water-resistant layer (7) and said base surface (6), whereby this module (1) contains supports (21,22) for said panels (33) extending in the longitudinal direction of the side walls (2,3), which extend between said water-resistant layer (7) and said free side (5) of at least one of the side walls (2), such that between the plane (23) which is defined by these supports (21,22) and said water-resistant layer (7) is formed a space for ventilation (24), **characterised in that** a first one of said side walls (2) has two supports (21,22) for said panels (33) extending in the longitudinal direction thereof, whereby a first one of these supports (21) extends on the side of the side wall (2) of said water-resistant layer (7), whereas a second one of these supports (22) extends on the opposite free lateral side of this first side wall (2), whereby the second side wall (3) of these side walls extends up to a height (A) from said base surface (6) which is smaller than or equal to the distance (B) from this base surface (6) to said second support (22).

2. Module according to claim 1, whereby said second side wall (3) has a protruding ridge (29) on its free lateral side, whereas said first side wall (2) has a recess (30) on its free lateral side with a bearing surface (31) at a height in relation to said base surface (6) which corresponds to the corresponding height of said ridge (29), such that when said free lateral side of said first side wall (2) of a first module (1) is placed in a connecting and practically fitting manner against the free lateral side of said second side wall (3) of a connecting second module (1), the latter will rest on the ridge (29) of the first module (1) via said bearing surface (31).

3. Module according to claim 1, whereby said first side wall (2) has a protruding ridge (29) on its free lateral side, whereas said second side wall (3) has a recess (30) on its free lateral side with a bearing surface (31) at a height in relation to said base surface (6) which corresponds to the corresponding height of said ridge (29), such that when said free lateral side of said second side wall (3) of a first module (1) is placed in a connecting and practically fitting manner against the free lateral side of said first side wall (2) of a connecting second module (1), the latter will rest on the ridge (29) of the first module (1) via said bearing surface (31).

4. Module according to any one of claims 1 to 3, whereby it further works in conjunction with an end profile (32) having two lips (25,26) extending in one and the same plane, whereby this end profile (32) can be fixed to the free side (5) of a first side wall (2) of said side walls (2,3), such that said lips (25,26) extend parallel to said base surface (6), whereby a U-shaped guide rail is formed between these lips (25,26) and said supports (21,22) in which is to be placed a lateral edge of said panels (33).

5. Module according to any one of claims 1 to 3, whereby the free side (5) of said first side wall (2) is T-shaped, such that a U-shaped guide rail is formed between said supports (21,22) and this free side (5) in which said panels (33) are to be placed with their lateral edges.

6. Module according to any one of claims 1 to 5 having at least one fastening member (39), whereby at least one of said side walls (2,3) has a recess (38) on its free lateral side in which the fastening member (39) is to be mounted, whereby this fastening member (39) must extend along the free lateral side of the side wall (2,3) concerned, past said base surface (6), and whereby the far end of the fastening member (39) extending past the base surface (6) forms a fixing part (41) which makes it possible to solidly connect the fastening member (39) to said roof construction.

7. Module according to any one of claims 1 to 6, whereby said supports (21,22) have a plane extending practically parallel to said base surface (6) on which said panels (33) must rest.

8. Module according to any one of claims 1 to 7, whereby said insulation material (19) practically entirely fills the space enclosed between said side walls (2,3), the water-resistant layer (7) and said base surface (6).

9. Module according to any one of claims 1 to 8, whereby said water-resistant layer (7) connects to said insulation material (19).

10. Module according to any one of claims 1 to 9, whereby a connection line between edges (17,18) of the water-resistant layer (7) connecting onto said side walls (2,3) is situated outside said insulation material (19).

11. Module according to any one of claims 1 to 10, whereby said water-resistant layer (7) is formed of a metal plate (16).

12. Module according to any one of claims 1 to 11, whereby each of said side walls (2,3) is composed of at least one profile (8,10), preferably made of metal, which extends in the longitudinal direction of the corresponding side wall (2,3) and which connects to a beam-shaped element (44,45) which also extends in the longitudinal direction of the corresponding side wall (2,3) and which is entirely enclosed by said insulation material (19) on the lateral sides of said side walls (2,3) directed towards one another.

13. Module according to any one of claims 1 to 11, whereby each of said side walls (2,3) is composed of at least two profiles (8,9,10,11), preferably made of metal, extending in the longitudinal direction of the corresponding side wall (2,3), and which are separated from one another by a thermal break (12) which is entirely enclosed by said insulation material (19) on the sides of said side walls (2,3) directed towards one another.

14. Module according to claim 13, whereby said thermal breaks (12) of both side walls (2,3) extend at practically the same distance from said base surface (6), such that the thermal breaks (12) of connecting modules (1) placed next to one another are positioned opposite each other.

15. Module according to claim 13 or 14, whereby said profiles (8,9,10,11) forming said side walls (2,3) have anchoring members (20) extending in said insulation material (19).

16. Module according to any one of claims 13 to 15, having at least one fastening member (39), whereby a profile (11) extending on the roof side (4) of each of the side walls (2,3) and forming at least partly said side wall (2,3) has a recess (38) on its free lateral side in which is to be mounted a retention part (40) of said fastening member (39), whereby this fastening member (39) must extend along the free lateral side of the side wall (2,3) concerned, past said base surface (6), and whereby the far end of the fastening member (39) opposite said retention part (40) forms a fixing part (41) making it possible to solidly connect the fastening member (39) to said roof construction.

17. Pair of profiles for making the module (1) according to any one of the preceding claims, whereby this pair of profiles comprises two elongated profiles (8,10), each having a roof side (4) and a free side (5), whereby these profiles (8,10) have means on their roof side (4) to connect to a thermal break (12) and are provided with a standing edge (14,15) on one of their lateral sides which allows to fix a water-resistant layer (7) to the profile (8,10), whereby a first profile (8) of this pair of profiles, between said standing edge (14) and the free side (5), has supports (21,22) on either side for a photovoltaic or thermal panel (33), whereby these supports (21,22) have a bearing surface extending practically transversely to the lateral side of the profiles (8,10), whereby the height of a second profile (10) of this pair of profiles is smaller than or equal to the distance between the roof side (4) and the supports (21,22) of the first profile (2).

18. Roof covering or wall cladding made by placing modules (1) according to any one of claims 1 to 15 next to one another, whereby these modules (1) are fixed adjacent to one another to a roof construction or to a wall, such that a first side wall (2) of each module (1) fits tightly to a second side wall (3) of a connecting module (1).
